# EUROPEAN PATENT APPLICATION

(11) **EP 4 012 895 A1**
(43) Date of publication of application: **15.06.2022**
(21) Application number: 20891294.9
(22) Date of filing: 07.09.2020
(51) Int. Cl.: H02K 3/04, H02K 3/34, H02K 15/04

(54) **STATOR AND METHOD FOR MANUFACTURING STATOR**

(30) Priority: 22.11.2019 JP 2019211072
(71) Applicant: AISIN CORPORATION, Aichi 448-8650 (JP)
(72) Inventor: KOGA, Kiyotaka, Kariya-shi, Aichi 448-8650 (JP); KOBUCHI, Takahiro, Kariya-shi, Aichi 448-8650 (JP)
(74) Representative: Kramer Barske Schmidtchen Patentanwälte PartG mbB
(86) International application number: PCT/JP2020/033795
(87) International publication number: WO 2021/100287

(57) **Abstract**

In the stator, a slot insulating member that includes a first insulating part provided at least between an inner surface of a slot and a slot inserting part and that provides electrical isolation between a stator core and a coil part is configured to overlap an end part of an insulating coating part on a slot inserting part side of a coil end part as viewed in a direction along an end surface in an axial direction of the stator core.

## Description

### TECHNICAL FIELD

The present invention relates to a stator and a method for manufacturing a stator.

### BACKGROUND ART

Conventionally, there is known a stator including a coil part including a slot inserting part which is inserted into a slot of a stator core; and a coil end part disposed outside the slot. Such a stator is disclosed in, for example, JP 2009-95193 A.

JP 2009-95193 A discloses a stator of a rotating electrical machine that includes a stator core provided with a plurality of slots; a coil including an inserting part (slot inserting part) which is inserted into a slot, and a coil end part and a stepped part which are disposed outside the slot; and an insulating sleeve (slot insulating member) disposed in the slot. In the stator described in JP 2009-95193 A, the stepped part is a portion provided between the inserting part and the coil end part. In the stator described in JP 2009-95193 A, in the coil, only the coil end part and the stepped part are coated with an insulating resin. In addition, in the stator described in JP 2009-95193 A, the insulating sleeve is disposed, in the slot, between an inner surface of the slot and the inserting part inserted into the slot. Note that in the stator described in JP 2009-95193 A, the insulating sleeve is not disposed in a portion on a stepped part side of the inserting part.

### CITATIONS LIST

### PATENT LITERATURE

Patent Literature 1: JP 2009-95193 A

### SUMMARY OF INVENTION

### TECHNICAL PROBLEMS

However, in the stator described in JP 2009-95193 A, the inserting part (slot inserting part) of the coil is not coated with an insulating resin, and the insulating sleeve (slot insulating member) is not disposed in a portion on the stepped part side of the inserting part. Thus, though there is no specific description in JP 2009-95193 A, it is conceivable that in the stator described in JP 2009-95193 A, an insulation process for providing electrical isolation between the stator core and a coil part (slot inserting part) needs to be separately performed for a portion on the stepped part side of the inserting part where the insulating sleeve is not disposed. Hence, when the slot inserting part of the coil part that is inserted into a slot is not coated with an insulating coating part like the stator described in JP 2009-95193 A, there is a problem that an operation process for providing electrical isolation between the stator core and the coil part (slot inserting part) is added.

The invention is made to solve a problem such as that described above, and provides a stator and a method for manufacturing a stator, in which even when a coil end part is provided with an insulating coating and a slot inserting part is not provided with an insulating coating, an operation process for providing electrical isolation between a stator core and a coil part (slot inserting part) can be prevented from being added.

### SOLUTIONS TO PROBLEMS

To provide the above-described stator, a stator according to a first aspect of the invention includes: a stator core provided with a plurality of slots; a coil part including a coil end part whose conductor surface is coated with an insulating coating part, the coil end part being disposed more outward in an axial direction of the stator core than an end surface in the axial direction of the stator core; and a slot inserting part whose conductor surface is not coated with the insulating coating part, the slot inserting part being formed continuously from the coil end part and being inserted into one of the plurality of slots; and a slot insulating member that includes a first insulating part provided, in each of the plurality of slots, at least between an inner surface of the slot and the slot inserting part and that provides electrical isolation between the stator core and the coil part, and at least a part of the slot inserting part is in contact with the slot insulating member, and the slot insulating member is configured to overlap an end part of the insulating coating part on the slot inserting part side of the coil end part as viewed in a direction along an end surface in the axial direction of the stator core.

In the stator according to the first aspect of the invention, as described above, a slot insulating member that includes a first insulating part provided at least between an inner surface of a slot and a slot inserting part and that provides electrical isolation between a stator core and a coil part is configured to overlap an end part of an insulating coating part on a slot inserting part side of a coil end part as viewed in a direction along an end surface in an axial direction of the stator core. By this, the first insulating part of the slot insulating member can be disposed not only between the inner surface of the slot and the slot inserting part, but also to farther extend to a coil end part side than the end part of the insulating coating part on the slot inserting part side of the coil end part. Thus, a required insulation creepage distance between a portion where a conductor surface adjacent to the end part on the slot inserting part side of the insulating coating part is not coated with an insulating coating part and the stator core can be easily secured. Therefore, electrical isolation between the stator core and the coil part (slot inserting part) can be sufficiently provided without separately performing an insulation process for providing electrical isolation between the stator core and the coil part (slot inserting part). As a result, even when the coil end part is provided with an insulating coating and the slot inserting part is not provided with an insulating coating, an operation process for providing electrical isolation between the stator core and the coil part (slot inserting part) can be prevented from being added. Note that the "required insulation creepage distance" is the minimum creepage distance necessary to secure insulation, and indicates a threshold value determined based on a potential difference between the stator core and the coil part.

In addition, to provide the above-described method for manufacturing a stator, a method for manufacturing a stator according to a second aspect of the invention is a method for manufacturing a stator including a stator core provided with a plurality of slots; and a coil part including a slot inserting part inserted into one of the plurality of slots, and the method includes: a coil part preparing step of preparing the coil part including a coil end part whose conductor surface is coated with an insulating coating part; and the slot inserting part whose conductor surface is not coated with the insulating coating part; an insulating member preparing step of preparing a slot insulating member that includes a first insulating part and provides electrical isolation between the stator core and the coil part; an insulating member disposing step of disposing the first insulating part in each of the plurality of slots; and a coil part disposing step of disposing the slot inserting part into each of the plurality of slots such that in the slot, the first insulating part is provided at least between an inner surface of the slot and the slot inserting part and such that at least a part of the slot inserting part is in contact with the slot insulating member, and disposing the coil end part more outward in an axial direction of the stator core than an end surface in the axial direction of the stator core, and the coil part disposing step is a step of disposing such that the slot insulating member overlaps an end part of the insulating coating part on the slot inserting part side of the coil end part as viewed in a direction along an end surface in the axial direction of the stator core.

The method for manufacturing a stator according to the second aspect of the invention includes, as described above, a step of disposing a slot insulating member that includes a first insulating part and provides electrical isolation between a stator core and a coil part, such that in a slot, the first insulating part is provided at least between an inner surface of the slot and a slot inserting part, and overlaps an end part of an insulating coating part on a slot inserting part side of a coil end part as viewed in a direction along an end surface in an axial direction of the stator core. By this, as with the stator according to the above-described first aspect, the first insulating part of the slot insulating member can be disposed not only between the inner surface of the slot and the slot inserting part, but also to farther extend to a coil end part side than the end part of the insulating coating part on the slot inserting part side of the coil end part. Thus, a required insulation creepage distance between a portion where a conductor surface adjacent to the end part on the slot inserting part side of the insulating coating part is not coated with an insulating coating part and the stator core can be easily secured. As a result, as with the stator according to the above-described first aspect, even when the coil end part is provided with an insulating coating and the slot inserting part is not provided with an insulating coating, an operation process for providing electrical isolation between the stator core and the coil part (slot inserting part) can be prevented from being added.

### ADVANTAGEOUS EFFECTS OF INVENTION

According to the present invention, as described above, even when a coil end part is provided with an insulating coating and a slot inserting part is not provided with an insulating coating, an operation process for providing electrical isolation between a stator core and a coil part (slot inserting part) can be prevented from being added.

### BRIEF DESCRIPTION OF DRAWINGS

FIG. 1 is a plan view of a rotating electrical machine including a stator according to a first embodiment.
FIG. 2 is a perspective view of the stator according to the first embodiment.
FIG. 3 is an enlarged plan view showing a configuration of a stator core according to the first embodiment.
FIG. 4 is a perspective view showing a configuration of a coil part according to the first embodiment.
FIG. 5 is a transverse cross-sectional view of a slot inserting part according to the first embodiment.
FIG. 6 is a transverse cross-sectional view of a coil end part according to the first embodiment.
FIG. 7 is a cross-sectional view taken along line 900-900 of FIG. 1.
FIG. 8 is an enlarged cross-sectional plan view showing a configuration of an insulating member according to the first embodiment.
FIG. 9 is an enlarged cross-sectional view of a portion near a boundary part between the slot inserting part and the coil end part according to the first embodiment.
FIG. 10 is a diagram showing a manufacturing flow of the stator according to the first embodiment.
FIG. 11 is an enlarged cross-sectional plan view showing a configuration of an insulating member according to a second embodiment.
FIG. 12 is an enlarged cross-sectional plan view showing a configuration of an insulating member according to a variant of the first embodiment.

### DESCRIPTION OF EMBODIMENTS

Embodiments that embody the present invention will be described below based on the drawings.

### [First Embodiment]

### (Structure of a stator)

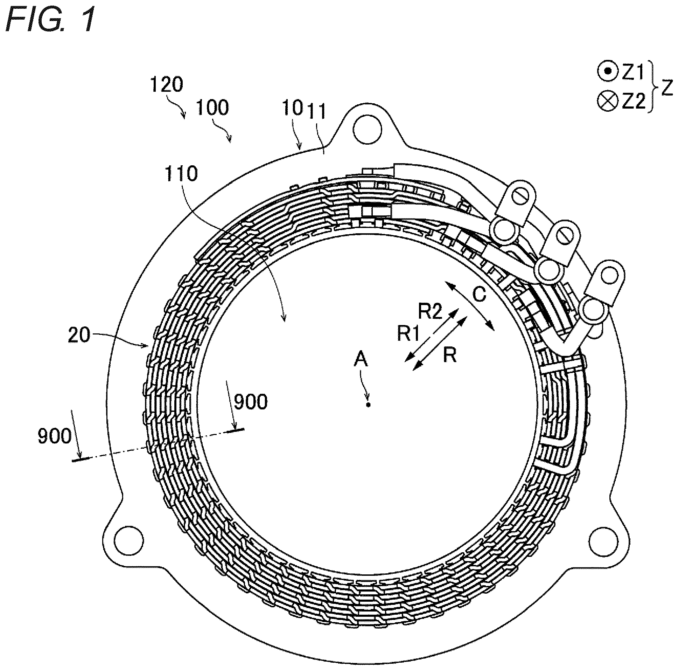

With reference to FIGS. 1 to 9, a structure of a stator 100 according to a first embodiment will be described. Note that in the following description, the axial direction, radial direction, and circumferential direction of a stator core 10 (see FIG. 1) included in the stator 100 are a Z-direction, an R-direction, and a C-direction, respectively. In addition, the one side and other side in the axial direction (Z-direction) are a Z 1-side and a Z2-side, respectively. In addition, the inner side (one side) and outer side (other side) in the radial direction (R-direction) are an R1-side and an R2-side, respectively.

As shown in FIG. 1, the stator 100 together with a rotor 110 forms a part of a rotating electrical machine 120. The rotating electrical machine 120 is, for example, a motor, a generator, or a motor-generator. The rotor 110 is disposed on the R1-side of the stator 100 such that an inner circumferential surface of the rotor 110 and an outer circumferential surface of the stator 100 face each other in the R-direction. Namely, the stator 100 is formed as a part of the rotating electrical machine of inner rotor type 120.

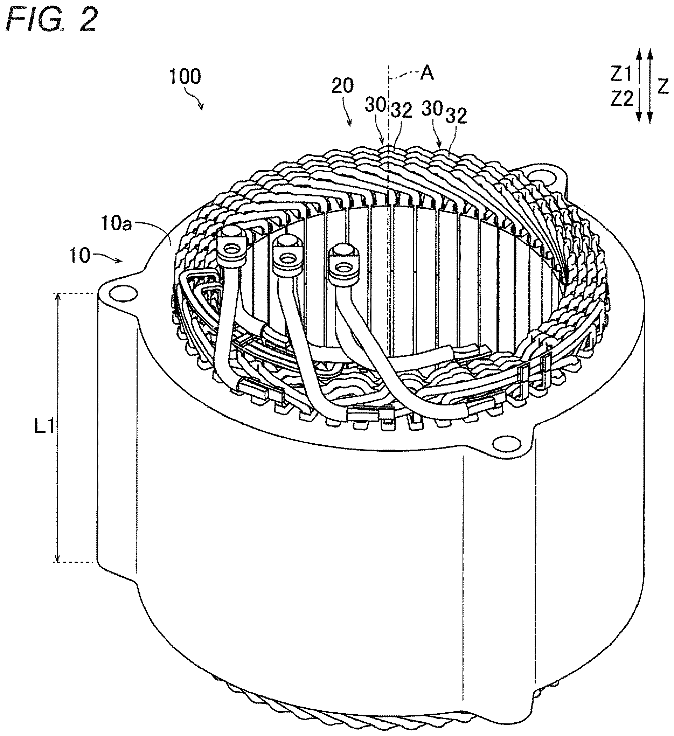

As shown in FIG. 2, the stator 100 includes the stator core 10 and coil parts 20.

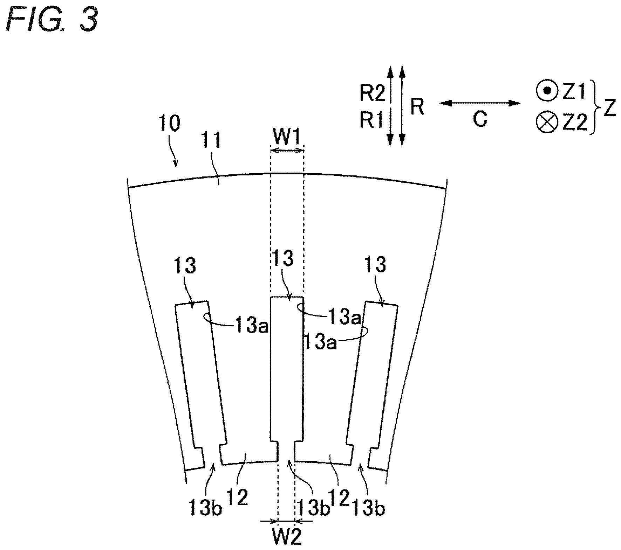

The stator core 10 has a cylindrical shape having a central axis line A extending in the Z-direction (a rotation axis line of the rotor 110 (see FIG. 1)) as its central axis. The stator core 10 is formed by stacking a plurality of electromagnetic steel sheets (e.g., silicon steel sheets) in the Z-direction. The stator core 10 has a length L1 in the Z-direction (a distance between an end surface 10a on the Z1-side of the stator core 10 and an end surface 10a on the Z2-side of the stator core 10). As shown in FIG. 3, the stator core 10 includes a circular back yoke 11; a plurality of teeth 12 protruding toward the R1-side from the back yoke 11; and a plurality of slots 13 each of which is formed between teeth 12 adjacent to each other in the C-direction.

The slots 13 are formed so as to extend in the Z-direction. In addition, the slots 13 open on each of the Z1-side and the Z2-side. Namely, a length L1 in the Z-direction of the slots 13 is equal to the length L1 in the Z-direction of the stator core 10. In addition, the slots 13 each are surrounded by inner surfaces 13a on the R2-side, the R1-side, the one side in the C-direction, and the other side in the C-direction. In addition, the slot 13 has a semi-open shape including, as viewed in the Z-direction, an opening part 13b that opens on the R1-side and that has a width W2 smaller than a width W1 in the C-direction of the slot 13.

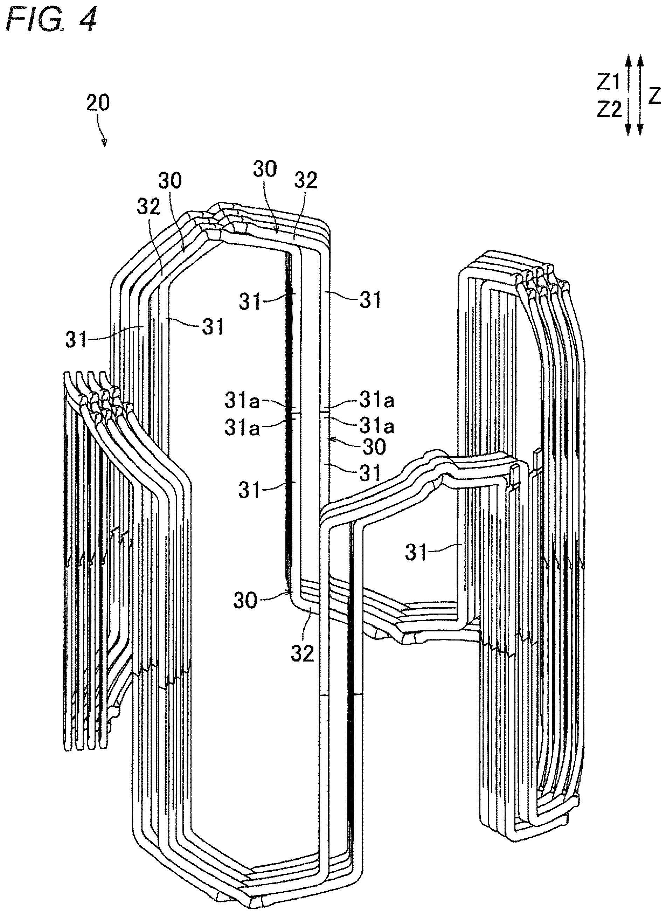

As shown in FIG. 4, a coil part 20 is formed as a wave-winding coil. The coil part 20 is provided for each of a plurality of phases (a U-phase, a V-phase, and a W-phase). The coil part 20 is formed by electrically connecting a plurality of segment conductors 30. Note that for convenience of description, FIG. 4 only shows a U-phase coil part 20 among the U-phase, V-phase, and W-phase coil parts 20.

The segment conductors 30 each include a pair of slot inserting parts 31; and a coil end part 32 formed continuously from the pair of slot inserting parts 31 so as to connect the slot inserting parts 31 together. The segment conductor 30 is formed to have a substantially U-shape as viewed in the R-direction by the pair of slot inserting parts 31 and the coil end part 32. A plurality of segment conductors 30 are disposed on each of the Z1-side and the Z2-side. A segment conductor 30 disposed on the Z1-side and a segment conductor 30 disposed on the Z2-side are electrically connected to each other by bringing tip parts 31a of slot inserting parts 31 into contact with each other. Note that as shown in FIG. 2, a coil end part 32 is disposed so as to be adjacent to a coil end part 32 of a segment conductor 30 of a different phase.

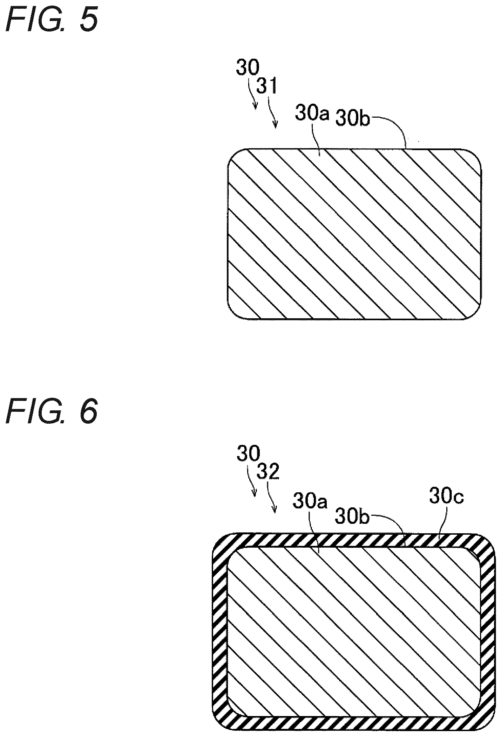

As shown in FIGS. 5 and 6, a segment conductor 30 includes a conductor 30a made of copper or aluminum. The conductor 30a is a rectangular conducting wire having a substantially rectangular transverse section. As shown in FIG. 5, in a slot inserting part 31, a surface of a conductor 30a (conductor surface 30b) is not coated with an insulating coating part 30c. In addition, as shown in FIG. 6, in a coil end part 32, a conductor surface 30b is coated with an insulating coating part 30c so that the coil end part 32 is electrically isolated from an adjacent coil end part 32 of a segment conductor 30 of a different phase. The insulating coating part 30c is coated by, for example, electrodeposition coating.

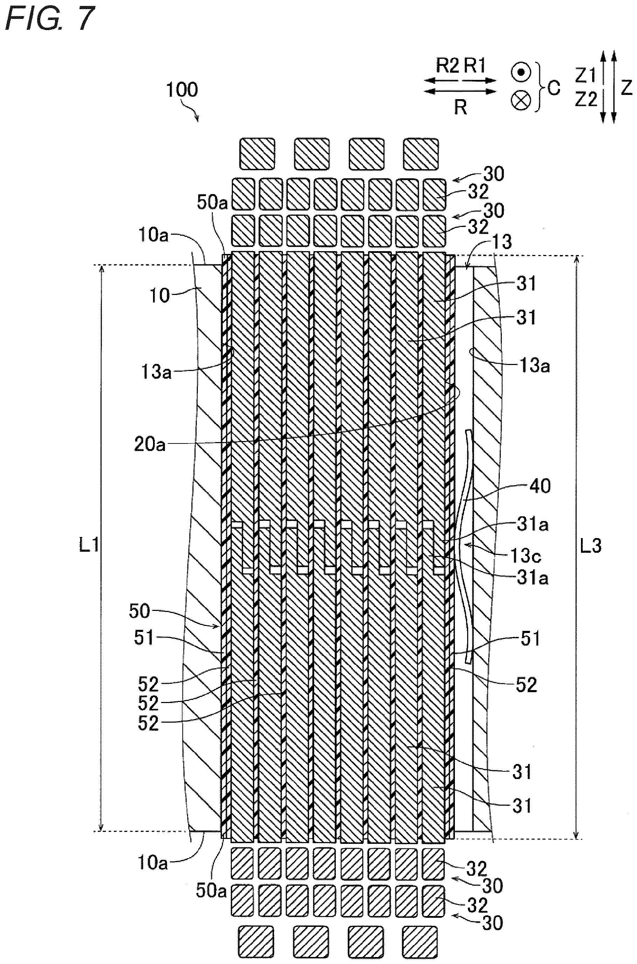

As shown in FIG. 7, slot inserting parts 31 are linearly formed in the Z-direction. The slot inserting parts 31 are inserted (disposed) into a slot 13. In addition, tip parts 3 1a of the slot inserting parts 31 are in contact with each other at a contact location 13c which is a substantially central portion in the Z-direction of the stator core 10. On the other hand, coil end parts 32 are disposed outside the slot 13. Namely, the coil end parts 32 are disposed more outward in the Z-direction than the end surfaces 10a in the Z-direction of the stator core 10.

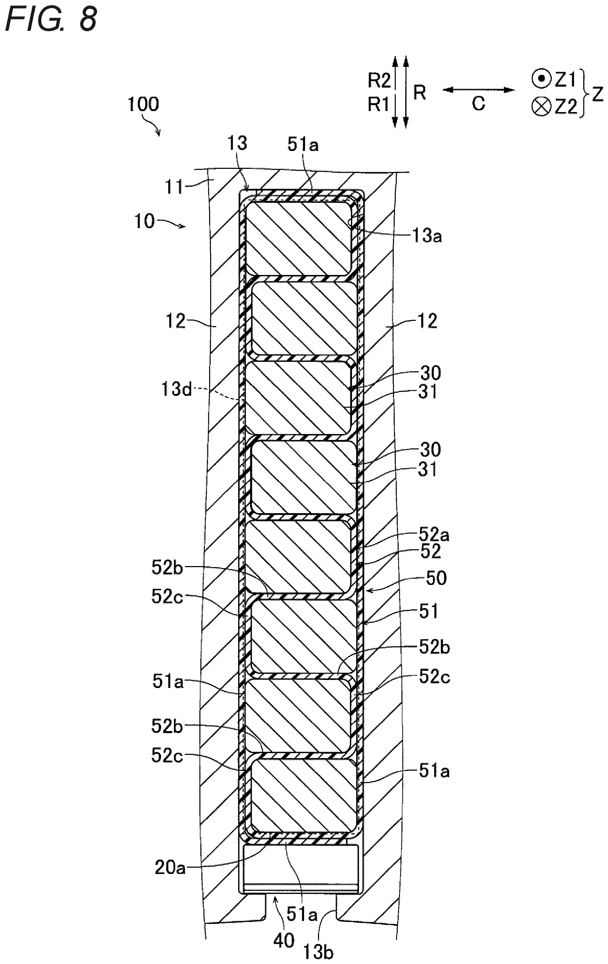

As shown in FIG. 8, a plurality of (eight in the first embodiment) slot inserting parts 31 are inserted into each of the plurality of slots 13 from each of the Z1-side and the Z2-side so as to be arranged side by side in the R-direction of the stator core 10. By this, a coil part 20 (see FIG. 7) is disposed such that a plurality of (eight) segment conductors 30 are arranged side by side in the R-direction. Note that the coil part 20 is configured such that segment conductors 30 of the same phase are disposed in the same slot 13.

As shown in FIG. 7, the stator 100 includes a pressing member 40 and an insulating member 50. Note that the insulating member 50 is an example of a "slot insulating member" in the claims.

The pressing member 40 is provided in the slot 13 so as to be sandwiched between a plane 20a on the R1-side of the coil part 20 (see FIG. 4) (planes on the R1-side of segment conductors 30 disposed farthest to the R1-side among the plurality of segment conductors 30 arranged side by side in the R-direction) and an inner surface 13a on the R1-side of the slot 13. The pressing member 40 is formed of a plate spring member which is deflectable in the R-direction. The pressing member 40 is configured to maintain a contact state between the tip parts 31a of the slot inserting parts 31 by pressing the coil part 20 from the R1-side.

The insulating member 50 includes an insulating layer made of a polyphenylene sulfide (PPS) resin, aramid paper, etc. The insulating member 50 is formed in sheet form. The insulating member 50 includes a first insulating part 51 for providing electrical isolation between the stator core 10 and the coil part 20; and a second insulating part 52 for providing electrical isolation between the segment conductors 30 whose slot inserting parts 31 are inserted into the same slot 13.

As shown in FIG. 8, the first insulating part 51 is provided, in the slot 13, at least between the inner surface 13a of the slot 13 and the slot inserting parts 31. Specifically, the first insulating part 51 includes portions 51a that linearly extend around a region 13d where all segment conductors 30 in the slot 13 are disposed. The portions 51a that linearly extend are disposed so as to enclose almost the entire perimeter of the region 13d. Note that at least a part of each of the slot inserting parts 31 is in contact with the first insulating part 51.

The second insulating part 52 is provided, in the slot 13, at least between the plurality of slot inserting parts 31 inserted into the same slot 13. Specifically, the second insulating part 52 includes a portion 52a having a meander shape that is provided all the way from a segment conductor 30 disposed on the R1-side to a segment conductor 30 disposed on the R2-side in the same slot 13. The portion 52a having a meander shape meanders, for each of the segment conductors 30 adjacent to each other in the R-direction, to extend in the C-direction of the stator core 10 between the segment conductors 30 and extend in the R-direction between the segment conductors 30 and the inner surface 13a of the slot 13. Namely, the portion 52a having a meander shape includes portions 52b extending in the C-direction of the stator core 10 between the segment conductors 30; and portions 52c extending in the R-direction between the segment conductors 30 and the inner surface 13a of the slot 13, and is continuously formed from the R1-side to the R2-side in order of a portion 52b disposed on one side in the C-direction, a portion 52c, a portion 52b disposed on the other side in the C-direction, and a portion 52c. The second insulating part 52 is integrally formed with the first insulating part 51 by connecting the portion 52a having a meander shape to the portions 51a that linearly extend which are included in the first insulating part 51.

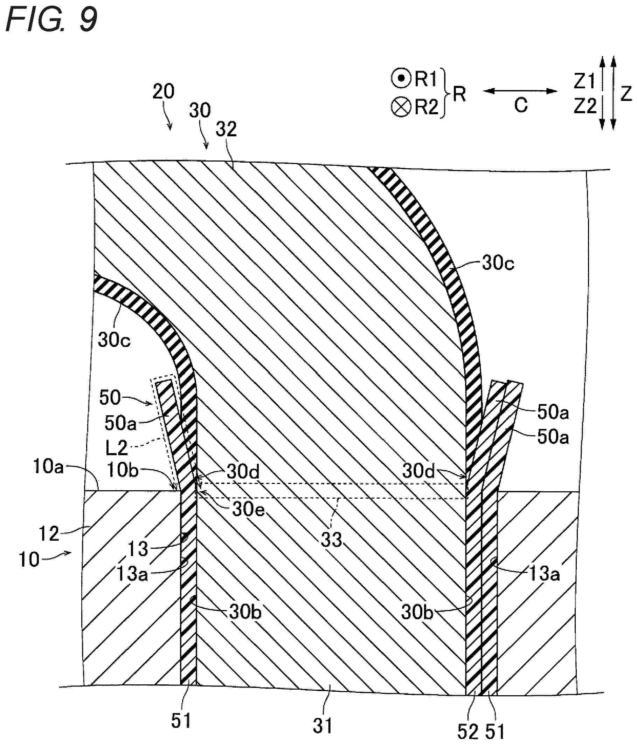

As shown in FIG. 9, in the first embodiment, the insulating member 50 is configured to overlap an end part 30d of an insulating coating part 30c on a slot inserting part 31 side of a coil end part 32 as viewed in a direction along an end surface 10a in the Z-direction of the stator core 10 (C-direction). Specifically, the insulating member 50 is configured to overlap the end part 30d of the insulating coating part 30c as viewed in the direction along the end surface 10a (C-direction) so that a creepage distance L2 from a portion 30e where a conductor surface 30b adjacent to the end part 30d on the slot inserting part 31 side of the insulating coating part 30c is not coated with an insulating coating part 30c to an end part 10b on a slot 13 side of the end surface 10a of the stator core 10 is a required insulation creepage distance. In addition, the insulating member 50 is configured to protrude outward in the Z-direction from the end surface 10a such that the insulating member 50 overlaps at a boundary part 33 between the coil end part 32 and the slot inserting part 31 as viewed in the direction along the end surface 10a (C-direction). Note that although in FIG. 9, for convenience of depiction, the insulating coating part 30c and the insulating member 50 are shown to have substantially the same thickness, since the thickness of the insulating coating part 30c and the thickness of the insulating member 50 are determined by their materials or required insulation performance, the insulating coating part 30c and the insulating member 50 may have the same thickness or one of the insulating coating part 30c and the insulating member 50 may be thicker than the other.

Specifically, a segment conductor 30 is disposed in the slot 13 such that the boundary part 33 between the slot inserting part 31 and the coil end part 32 substantially matches in the Z-direction the location of the end surface 10a in the Z-direction of the stator core 10. The end part 30d on the slot inserting part 31 side of the insulating coating part 30c is located at the boundary part 33. There is a need to provide electrical isolation between the portion 30e where the conductor surface 30b adjacent to the end part 30d on the slot inserting part 31 side of the insulating coating part 30c is not coated with an insulating coating part 30c and the end part 10b on the slot 13 side of the end surface 10a of the stator core 10 (between the stator core 10 and the coil part 20).

Hence, an end part 50a in the Z-direction of a first insulating part 51 provided between the stator core 10 and the slot inserting part 31 protrudes outward in the Z-direction from the end surface 10a of the stator core 10 so that the creepage distance L2 between the portion 30e where the conductor surface 30b adjacent to the end part 30d on the slot inserting part 31 side of the insulating coating part 30c is not coated with an insulating coating part 30c and the end part 10b on the slot 13 side of the end surface 10a of the stator core 10 is a required insulation creepage distance. By this, the end part 50a in the Z-direction of the first insulating part 51 overlaps the end part 30d of the insulating coating part 30c as viewed in a direction along the end surface 10a in the Z-direction of the stator core 10 (R-direction). Namely, the creepage distance L2 is a creepage distance of the end part 50a in the Z-direction of the first insulating part 51 between the portion 30e where the conductor surface 30b adjacent to the end part 30d on the slot inserting part 31 side of the insulating coating part 30c is not coated with an insulating coating part 30c and the end part 10b on the slot 13 side of the end surface 10a of the stator core 10. Note that the first insulating part 51 has a distance L3 larger than the distance L1 in the Z-direction of the stator core 10 so that the end part 50a in the Z-direction of the first insulating part 51 can protrude outward in the Z-direction from the end surface 10a of the stator core 10.

Note that although FIG. 9 shows a state in which the end part 50a of the first insulating part 51 overlaps the end part 30d of the insulating coating part 30c as viewed in the C-direction, the overlapping state is also the same when viewed in the R-direction. In addition, as shown in FIG. 7, the second insulating part 52 also protrudes outward in the Z-direction from the end surface 10a in the Z-direction of the stator core 10 by substantially the same distance as the first insulating part 51. Namely, as with the end part 50a of the first insulating part 51, an end part 50a of the second insulating part 52 also overlaps the end part 30d of the insulating coating part 30c.

### (Method for manufacturing the stator)

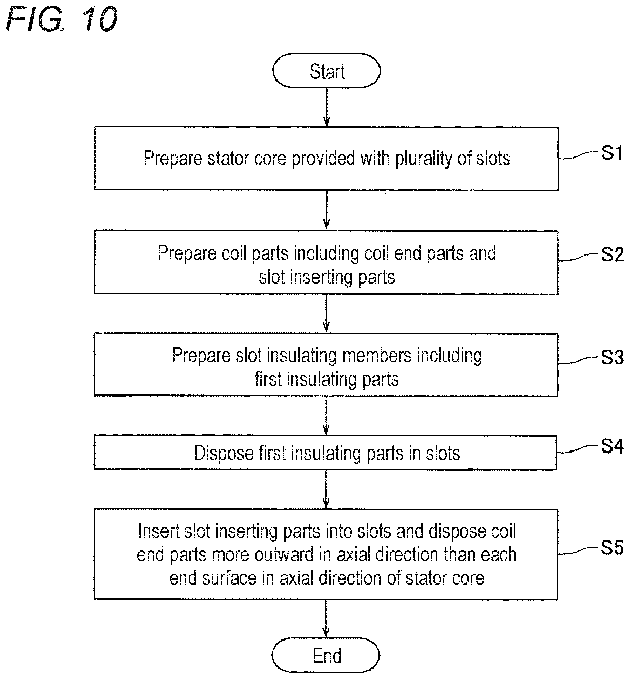

Next, with reference to FIG. 10, a method for manufacturing the stator 100 will be described.

As shown in FIG. 10, first, at step S1, a stator core 10 provided with a plurality of slots 13 is prepared.

Then, at step S2, coil parts 20 are prepared that include coil end parts 32 whose conductor surfaces 30b are coated with insulating coating parts 30c; and slot inserting parts 31 whose conductor surfaces 30b are not coated with insulating coating parts 30c. Note that step S2 is an example of a "coil part preparing step" in the claims.

Then, at step S3, insulating members 50 are prepared, each including a first insulating part 51 and providing electrical isolation between the stator core 10 and a coil part 20. Note that step S2 is an example of an "insulating member preparing step" in the claims.

Then, at step S4, the first insulating parts 51 are disposed in the slots 13. Note that step S4 is an example of an "insulating member disposing step" in the claims.

Then, at step S5, the slot inserting parts 31 are inserted into the slots 13 such that in each slot 13, the insulating member 50 is provided at least between an inner surface 13a of the slot 13 and the slot inserting parts 31 and such that at least a part of each of the slot inserting parts 31 is in contact with the insulating member 50, and the coil end parts 32 are disposed more outward in the Z-direction than each end surface 10a in the Z-direction of the stator core 10. In the present embodiment, at step S5, each insulating member 50 is disposed so as to overlap an end part 30d of an insulating coating part 30c on a slot inserting part 31 side of a coil end part 32 as viewed in a direction along each end surface 10a in the Z-direction of the stator core 10. Note that step S5 is an example of a "coil part disposing step" in the claims.

Note that in the above-described flow, step S1 and step S2 may be performed in reverse order.

### [Second Embodiment]

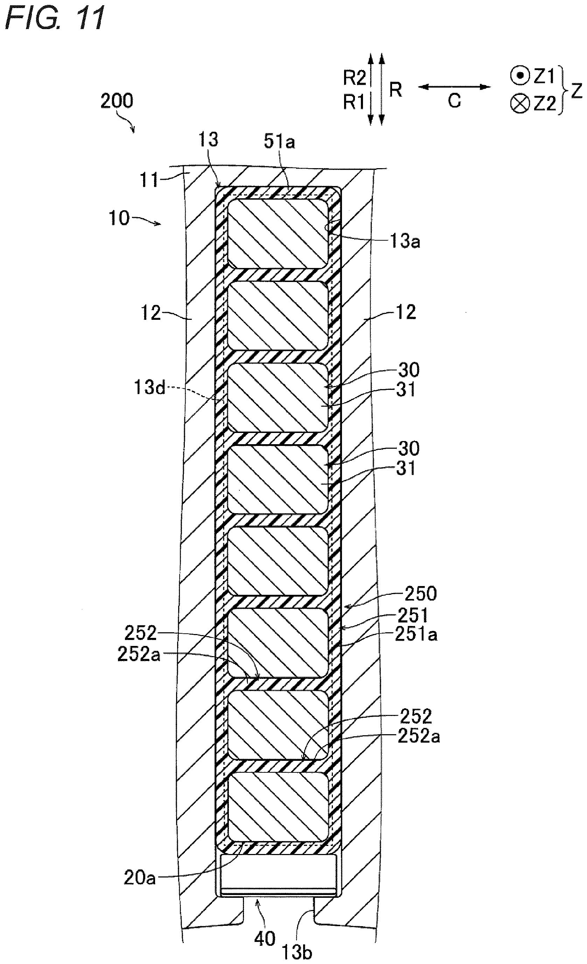

With reference to FIG. 11, a structure of a stator 200 according to a second embodiment will be described. In the second embodiment, an insulating member 250 has a different shape than the insulating member 50 of the stator 100 according to the first embodiment. Note that in the drawing, portions having the same configurations as those of the first embodiment are given the same reference signs.

As shown in FIG. 11, the stator 200 according to the second embodiment includes the insulating member 250. Note that the insulating member 250 is an example of a "slot insulating member" in the claims.

The insulating member 250 includes a first insulating part 251 and a second insulating part 252. The first insulating part 251 is formed of an annular portion 251a which is provided annularly to surround a region 13d where all segment conductors 30 in a slot 13 are disposed. The second insulating part 252 is formed of an inter-segment conductor portion 252a provided between the segment conductors 30 in the same slot 13 so as to extend in the circumferential direction (C-direction) of the stator core 10. The inter-segment conductor portion 252a is formed continuously from the annular portion 251a. Namely, the annular portion 251a that forms the first insulating part 51 and the inter-segment conductor portion 252a that forms the second insulating part 52 are integrally formed. Note that the insulating member 250 has a ladder shape as viewed in the Z-direction.

Though not shown, in the second embodiment, as with the insulating member 50 of the first embodiment, the insulating member 250 is configured to overlap an end part 30d of an insulating coating part 30c on a slot inserting part 31 side of a coil end part 32 as viewed in a direction along an end surface 10a in the Z-direction of the stator core 10 (the R-direction or the C-direction). Namely, the insulating member 250 is configured to overlap the end part 30d of the insulating coating part 30c as viewed in the direction along the end surface 10a (C-direction) so that a creepage distance L2 from a portion 30e where a conductor surface 30b adjacent to the end part 30d on a slot inserting part 31 side of the insulating coating part 30c is not coated with an insulating coating part 30c to an end part 10b on a slot 13 side of the end surface 10a of the stator core 10 is a required insulation creepage distance.

Note that other configurations of the stator 200 according to the second embodiment are the same as those of the above-described first embodiment.

### [Advantageous effects of the embodiments]

In the above-described first and second embodiments, advantageous effects such as those shown below can be obtained.

### (Advantageous effects of the stator)

In the first and second embodiments, as described above, an insulating member (50, 250) (slot insulating member) that includes a first insulating part (51, 251) provided at least between an inner surface (13a) of a slot (13) and a slot inserting part (31) and that provides electrical isolation between a stator core (10) and a coil part (20) is configured to overlap an end part (30d) of an insulating coating part (30c) on a slot inserting part (31) side of a coil end part (32) as viewed in a direction along an end surface (10a) in the axial direction (Z-direction) of the stator core (10) (the R-direction or the C-direction). By this, the first insulating part (51, 251) of the insulating member (50, 250) (slot insulating member) can be disposed not only between the inner surface (13a) of the slot (13) and the slot inserting part (31), but also to farther extend to a coil end part (32) side than the end part (30d) of the insulating coating part (30c) on the slot inserting part 31 side of the coil end part (32). Thus, a required insulation creepage distance between a portion (30e) where a conductor surface (30b) adjacent to the end part (30d) on the slot inserting part (31) side of the insulating coating part (30c) is not coated with an insulating coating part (30c) and the stator core (10) can be easily secured. Therefore, electrical isolation between the stator core (10) and the coil part (20) (slot inserting part (31)) can be sufficiently provided without separately performing an insulation process for providing electrical isolation between the stator core (10) and the coil part (20) (slot inserting part (31)). As a result, even when the coil end part (32) is provided with an insulating coating and the slot inserting part (31) is not provided with an insulating coating, an operation process for providing electrical isolation between the stator core (10) and the coil part (20) (slot inserting part (31)) can be prevented from being added.

In addition, in the first and second embodiments, as described above, an insulating member (50, 250) (slot insulating member) is configured to overlap an end part (30d) of an insulating coating part (30c) as viewed in a direction along an end surface (10a) of a stator core (10) (the R-direction or the C-direction) so that a creepage distance (L2) from a portion (30e) where a conductor surface (30b) adjacent to the end part (30d) on a slot inserting part (31) side of the insulating coating part (30c) is not coated with an insulating coating part (30c) to an end part (10b) on a slot (13) side of the end surface (10a) is a required insulation creepage distance. According to such a configuration, a required insulation creepage distance between the portion (30e) where the conductor surface (30b) adjacent to the end part (30d) on the slot inserting part (31) side of the insulating coating part (30c) is not coated with an insulating coating part (30c) and the stator core (10) can be securely ensured. Thus, electrical isolation between the stator core (10) and a coil part (20) (slot inserting parts (31)) can be securely provided without separately performing an insulation process for providing electrical isolation between the stator core (10) and the coil part (20) (slot inserting part (31)).

In addition, in the first and second embodiments, as described above, a coil part (20) is disposed such that segment conductors (30) that form the coil part (20) are arranged side by side in the radial direction (R-direction) by inserting a plurality of slot inserting parts (31) into each of a plurality of slots (13) such that the plurality of slot inserting parts (31) are arranged side by side in the radial direction (R-direction) of a stator core (10), and an insulating member (50, 250) (slot insulating member) further includes a second insulating part (52, 252) that is provided, in a slot (13), at least between a plurality of slot inserting parts (31) inserted into the same slot (13) and that provides electrical isolation between segment conductors (30) whose slot inserting parts (31) are inserted into the same slot (13). According to such a configuration, by the second insulating part (52, 252), electrical isolation between segment conductors (30) (slot inserting parts (31)) whose slot inserting parts (31) are inserted into the same slot (13) can be sufficiently provided without separating performing an insulation process for providing electrical isolation between the segment conductors (30) (slot inserting parts (31)) whose slot inserting parts (31) are inserted into the same slot (13).

In addition, in the first embodiment, as described above, a segment conductor (30) is a rectangular conducting wire having a substantially rectangular transverse section, and a second insulating part (52) includes a portion (52a) having a meander shape that is provided all the way from a segment conductor (30) disposed farthest to one side (R1-side) in the radial direction (R-direction) to a segment conductor (30) disposed farthest to the other side (R2-side) in the radial direction (R-direction) in the same slot (13) such that the portion (52a) having a meander shape meanders, for each of segment conductors (30) adjacent to each other in the radial direction (R-direction), to extend in the circumferential direction (C-direction) of the stator core (10) between the segment conductors (30) and extend in the radial direction (R-direction) between the segment conductors (30) and an inner surface (13a) of a slot (13). According to such a configuration, by the portion (52a) having a meander shape, the second insulating part (52) can be easily disposed so that electrical isolation can be provided between segment conductors (30) (slot inserting parts (31)) whose slot inserting parts (31) are inserted into the same slot (13). In addition, the portion (52a) having a meander shape meanders to extend in the circumferential direction (C-direction) of the stator core (10) between the segment conductors (30) and extend in the radial direction (R-direction) between the segment conductors (30) and the inner surface (13a) of the slot (13), and thus, compared to a case in which portions (52b) extending in the circumferential direction (C-direction) of the stator core (10) between the segment conductors (30) and portions (52c) extending in the radial direction (R-direction) between the segment conductors (30) and the inner surface (13a) of the slot (13) are provided as individual parts, the number of parts can be reduced.

In addition, in the first embodiment, as described above, a first insulating part (51) includes portions (51a) that linearly extend around a region (13d) where all segment conductors (30) in a slot (13) are disposed, and a second insulating part (52) is integrally formed with the first insulating part (51) by connecting a portion (52a) having a meander shape to the portions (51a) that linearly extend which are included in the first insulating part (51). According to such a configuration, by the portions (51a) that linearly extend, the first insulating part (51) can be disposed in a portion where the portion (52a) having a meander shape which is included in the second insulating part (52) is not disposed, between an inner surface (13a) of the slot (13) and slot inserting parts (31). Thus, the first insulating part (51) can be easily disposed so that electrical isolation can be provided between a stator core (10) and a coil part (20) (slot inserting parts (31)). In addition, by the portion (52a) having a meander shape and the portions (51a) that linearly extend, the first insulating part (51) and the second insulating part (52) are integrally formed, and thus, compared to a case in which the first insulating part (51) and the second insulating part (52) are provided as individual parts, the number of parts can be reduced.

In addition, in the second embodiment, as described above, a segment conductor (30) is a rectangular conducting wire having a substantially rectangular transverse section, and in an insulating member (250) (slot insulating member), an annular portion (251a) that forms a first insulating part (251) and that is provided annularly to surround a region (13d) where all segment conductors (30) in a slot (13) are disposed is integrally formed with an inter-segment conductor portion (252a) that forms a second insulating part (252) and that is formed continuously from the annular portion (251a) and is provided between the segment conductors (30) in the same slot (13) so as to extend in the circumferential direction (C-direction) of a stator core (10). According to such a configuration, by the annular portion (251a) of the first insulating part (251) and the inter-segment conductor portion (252a) of the second insulating part (252), the insulating member (250) (slot insulating member) can be easily disposed so that electrical isolation can be provided between the stator core (10) and a coil part (20) and between the segment conductors (30). In addition, by the annular portion (251a) and the inter-segment conductor portion (252a), the first insulating part (251) and the second insulating part (252) are integrally formed, and thus, compared to a case in which the first insulating part (251) and the second insulating part (252) are provided as individual parts, the number of parts can be reduced. In addition, compared to a case in which as in the first embodiment, the second insulating part (52) includes a portion (52a) having a meander shape, the second insulating part (252) can be formed in simple shape, and thus, an operation of manufacturing the insulating member (250) (slot insulating member) can be easily mechanized (e.g., formed by injection molding).

In addition, in the first and second embodiments, as described above, a coil part (20) is provided for each of a plurality of phases (a U-phase, a V-phase, and a W-phase) and is configured such that segment conductors (30) of the same phase are disposed in the same slot (13), and a coil end part (32) is adjacent to a coil end part (32) of a segment conductor (30) of a different phase and has a conductor surface (30b) coated with an insulating coating part (30c) so that the coil end part (32) is electrically isolated from the adjacent coil end part (32) of the segment conductor (30) of the different phase. According to such a configuration, since a potential difference between segment conductors (30) of the same phase is small compared to a potential difference between segment conductors (30) of different phases, in order to provide electrical isolation between adjacent segment conductors (30) of difference phases, there is a need to relatively increase the thickness of insulating coating parts (30c) of coil end parts (32) disposed outside a slot (13), whereas the thickness of an insulating member (50, 250) (slot insulating member) required to provide electrical isolation between segment conductors (30) of the same phase disposed in the slot (13) can be relatively reduced. As a result, a reduction in the rate of a coil part (20) occupied in the slot (13) can be prevented.

In addition, in the first and second embodiments, as described above, an insulating member (50, 250) (slot insulating member) is configured to protrude outward in the axial direction (Z-direction) from an end surface (10a) such that the insulating member (50, 250) (slot insulating member) overlaps an end part (30d) of an insulating coating part (30c) at a boundary part (33) between an coil end part (32) and a slot inserting part (31) as viewed in a direction along the end surface (10a) (the R-direction or the C-direction). According to such a configuration, since it is common that the end part (30d) of the insulating coating part (30c) of the coil end part (32) be located at the boundary part (33) between the coil end part (32) and the slot inserting part (31), the insulating member (50, 250) (slot insulating member) can be easily disposed so as to overlap the end part (30d) of the insulating coating part (30c) of the coil end part (32) as viewed in the direction along the end surface (10a) in the axial direction (Z-direction) of the stator core (10) (the R-direction or the C-direction).

### (Advantageous effects of the method for manufacturing the stator)

Manufacturing methods of the above-described first and second embodiments include, as described above, a step of disposing an insulating member (50, 250) (slot insulating member) that includes a first insulating part (51, 251) and provides electrical isolation between a stator core (10) and a coil part (20), such that the first insulating part (51, 251) is provided, in a slot (13), at least between an inner surface (13a) of the slot (13) and a slot inserting part (31), and overlaps an end part (30d) of an insulating coating part (30c) on a slot inserting part (31) side of a coil end part (32) as viewed in a direction along an end surface (10a) in the axial direction (Z-direction) of the stator core (10). By this, the first insulating part (51, 251) of the slot insulating member (50, 250) (slot insulating member) can be disposed not only between the inner surface (13a) of the slot (13) and the slot inserting part (31), but also to farther extend to a coil end part (32) side than the end part (30d) of the insulating coating part (30c) on the slot inserting part (31) side of the coil end part (32). Thus, a required insulation creepage distance between a portion (30e) where a conductor surface (30b) adjacent to the end part (30d) on the slot inserting part (31) side of the insulating coating part (30c) is not coated with an insulating coating part (30c) and the stator core (10) can be easily secured. As a result, even when the coil end part (32) is provided with an insulating coating and the slot inserting part (31) is not provided with an insulating coating, an operation process for providing electrical isolation between the stator core (10) and the coil part (20) (slot inserting part (31)) can be prevented from being added.

### [Variants]

Note that the presently disclosed embodiments are to be considered in all respects as illustrative and not restrictive. The scope of the present invention is indicated by the claims rather than the description of the above-described embodiments, and all changes (variants) which come within the meaning and range of equivalency of the claims are further embraced therein.

For example, although the first and second embodiments show an example in which an insulating member 50, 250 (slot insulating member) is configured to protrude outward in the axial direction (Z-direction) from an end surface 10a such that the insulating member 50, 250 (slot insulating member) overlaps an end part 30d of an insulating coating part 30c at a boundary part 33 between an coil end part 32 and a slot inserting part 31 as viewed in a direction along the end surface 10a (the R-direction or the C-direction), the present invention is not limited thereto. In the present invention, when an end part of an insulating coating part is not located at a boundary part between a coil end part and a slot inserting part, an insulating member (slot insulating member) may be configured to protrude outward in the axial direction from an end surface such that the insulating member (slot insulating member) overlaps the end part of the insulating coating part at a location other than the boundary part between the coil end part and the slot inserting part as viewed in a direction along the end surface.

In addition, although the first and second embodiments show an example in which a coil part 20 is configured such that segment conductors 30 of the same phase are disposed in the same slot 13, the present invention is not limited thereto. In the present invention, a coil part may be configured such that segment conductors of different phases are disposed in the same slot.

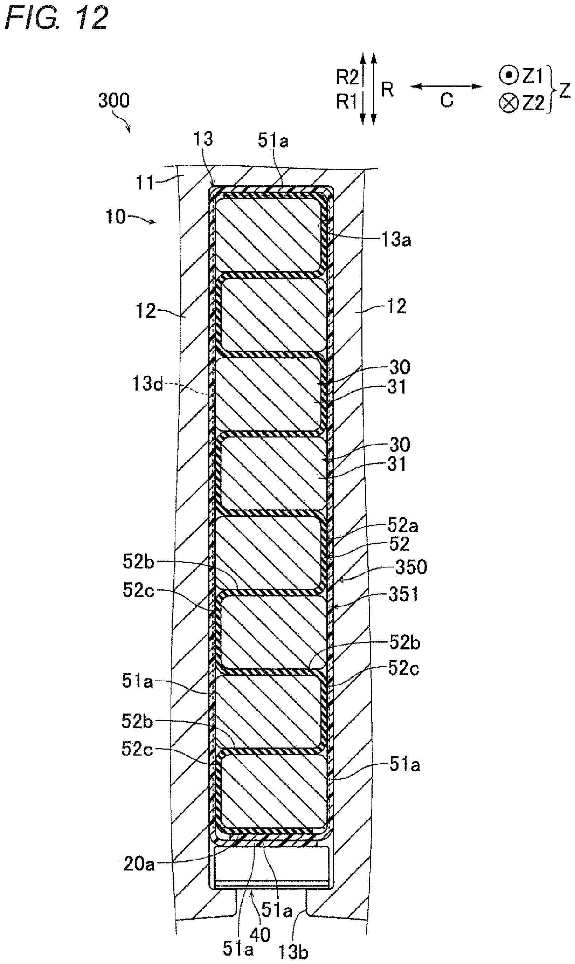

In addition, although the first embodiment shows an example in which a second insulating part 52 including a portion 52a having a meander shape is integrally formed with a first insulating part 51 including portions 51a that linearly extend, the present invention is not limited thereto. In the present invention, the second insulating part 52 including the portion 52a having a meander shape may be provided separately from a first insulating part 351 including the portions 51a that linearly extend, like an insulating member 350 (slot insulating member) included in a stator 300 according to a variant of the first embodiment which is shown in FIG. 12.

In addition, although the first embodiment shows an example in which a portion 52a having a meander shape is provided all the way from a segment conductor 30 disposed farthest to one side (R1-side) in the radial direction (R-direction) to a segment conductor 30 disposed farthest to the other side (R2-side) in the radial direction (R-direction) in the same slot 13 such that the portion 52a having a meander shape meanders, for each of segment conductors 30 adjacent to each other in the radial direction (R-direction), to extend in the circumferential direction (C-direction) of the stator core (10) between the segment conductors 30 and extend in the radial direction (R-direction) between the segment conductors 30 and an inner surface 13a of the slot 13, the present invention is not limited thereto. In the present invention, a member having a meander shape that meanders, for each of segment conductors adjacent to each other in the radial direction, to extend in the circumferential direction of the stator core between the segment conductors and extend in the radial direction between the segment conductors and an inner surface of a slot may be provided such that the member having a meander shape is divided into a plurality of parts and the divided parts are arranged side by side in the radial direction all the way from a segment conductor disposed farthest to one side in the radial direction to a segment conductor disposed farthest to the other side in the radial direction in the same slot. In addition, a member (hereinafter, a unit member) that includes a portion extending in the circumferential direction of the stator core between segment conductors adjacent to each other in the radial direction may be provided for each of all segment conductors in the same slot. In this case, it is desirable that the unit member include a portion that is formed continuously from an end part in the circumferential direction of the portion extending in the circumferential direction of the stator core between segment conductors and that extends in the radial direction between the segment conductors and an inner surface of the slot.

In addition, although the first and second embodiments show an example in which an insulating member 50, 250 (slot insulating member) includes a second insulating part 52, 252 for providing electrical isolation between segment conductors 30 whose slot inserting parts 31 are inserted into the same slot 13, the present invention is not limited thereto. In the present invention, an insulating member (slot insulating member) may be configured not to include a second insulating part for providing electrical isolation between segment conductors whose slot inserting parts are inserted into the same slot.

### REFERENCE SIGNS LIST

10: Stator core, 10a: End surface (in the axial direction of the stator core), 10b: End part (on a slot side of the end surface in the axial direction of the stator core), 13: Slot, 13a: Inner surface (of the slot), 13d: Region (where all segment conductors in the slot are disposed), 20: Coil part, 30: Segment conductor, 30b: Conductor surface, 30c: Insulating coating part, 30d: End part (of the insulating coating part), 30e: Portion (where a conductor surface adjacent to the end part on a slot inserting part side of the insulating coating part is not coated with an insulating coating part), 31: Slot inserting part, 32: Coil end part, 33: Boundary part (between the coil end part and the slot inserting part), 50, 250, 350: Insulating member (slot insulating member), 51, 251, 351: First insulating part, 52, 252: Second insulating part, 100, 200, 300: Stator, and L2: Creepage distance (from the portion where a conductor surface adjacent to the end part on a slot inserting part side of the insulating coating part is not coated with an insulating coating part to the end part on the slot side of the end surface of the stator core)

## Claims

1. A stator comprising:
a stator core provided with a plurality of slots;
a coil part including a coil end part whose conductor surface is coated with an insulating coating part, the coil end part being disposed more outward in an axial direction of the stator core than an end surface in the axial direction of the stator core; and a slot inserting part whose conductor surface is not coated with the insulating coating part, the slot inserting part being formed continuously from the coil end part and being inserted into one of the plurality of slots; and
a slot insulating member that includes a first insulating part provided, in each of the plurality of slots, at least between an inner surface of the slot and the slot inserting part and that provides electrical isolation between the stator core and the coil part,
wherein
at least a part of the slot inserting part is in contact with the slot insulating member, and
the slot insulating member is configured to overlap an end part of the insulating coating part on the slot inserting part side of the coil end part as viewed in a direction along an end surface in the axial direction of the stator core.

2. The stator according to claim 1, wherein the slot insulating member is configured to overlap the end part of the insulating coating part as viewed in a direction along the end surface so that a creepage distance from a portion where the conductor surface adjacent to the end part on the slot inserting part side of the insulating coating part is not coated with the insulating coating part to an end part on the slot side of the end surface of the stator core is a required insulation creepage distance.

3. The stator according to claim 1 or 2, wherein
the coil part is disposed such that segment conductors that form the coil part are arranged side by side in a radial direction of the stator core by inserting a plurality of the slot inserting parts into each of the plurality of slots such that the plurality of the slot inserting parts are arranged side by side in the radial direction of the stator core, and
the slot insulating member further includes a second insulating part that is provided, in each of the plurality of slots, at least between a plurality of the slot inserting parts inserted into a same slot and that provides electrical isolation between the segment conductors whose slot inserting parts are inserted into the same slot.

4. The stator according to claim 3, wherein
the coil part is provided for each of a plurality of phases and is configured such that the segment conductors of a same phase are disposed in a same slot, and
each of the coil end parts is adjacent to the coil end part of the segment conductor of a different phase and has the conductor surface coated with the insulating coating part so that the coil end part is electrically isolated from the adjacent coil end part of the segment conductor of a different phase.

5. The stator according to any one of claims 1 to 4, wherein the slot insulating member is configured to protrude outward in the axial direction from the end surface such that the slot insulating member overlaps an end part of the insulating coating part at a boundary part between the coil end part and the slot inserting part as viewed in a direction along the end surface.

6. A method for manufacturing a stator including a stator core provided with a plurality of slots; and a coil part including a slot inserting part inserted into one of the plurality of slots, the method comprising:
a coil part preparing step of preparing the coil part including a coil end part whose conductor surface is coated with an insulating coating part; and the slot inserting part whose conductor surface is not coated with the insulating coating part;
an insulating member preparing step of preparing a slot insulating member that includes a first insulating part and provides electrical isolation between the stator core and the coil part;
an insulating member disposing step of disposing the first insulating part in each of the plurality of slots; and
a coil part disposing step of inserting the slot inserting part into one of the plurality of slots such that in the slot, the first insulating part is provided at least between an inner surface of the slot and the slot inserting part and such that at least a part of the slot inserting part is in contact with the slot insulating member, and disposing the coil end part more outward in an axial direction of the stator core than an end surface in the axial direction of the stator core,
wherein
the coil part disposing step is a step of disposing such that the slot insulating member overlaps an end part of the insulating coating part on the slot inserting part side of the coil end part as viewed in a direction along an end surface in the axial direction of the stator core.
